# FASCICULE DE BREVET EUROPEEN

(11) **EP 0 463 982 B1**
(45) Date de publication et mention de la délivrance du brevet: **19.04.1995**
(21) Numéro de dépôt: 91440052.8
(22) Date de dépôt: 25.06.1991
(51) Int. Cl.: G01J 1/42

(54) **Dispositif d'analyse en mode continu et en mode impulsionnel de la répartition d'énergie au sein d'un faisceau laser de puissance et de l'alignement de ce dernier**
Vorrichtung zur kontinuierlichen Analyse und Impuls-Analyse der Energieverteilung eines Leistungslaserstrahls und Vorrichtung zum Ausrichten dieses Strahls
Apparatus for continuous- and pulse analysis of the energy distribution of a power laser beam and apparatus for alignement of this beam

(30) Priorité: 26.06.1990 FR 9008423
(43) Date de publication de la demande: 02.01.1992
(73) Titulaire: ELECTRICITE DE STRASBOURG, S.A., F-67000 Strasbourg (FR)
(72) Inventeur: Boisselier, Didier, F-52190 Prauthoy (FR)
(74) Mandataire: Nuss, Pierre

(56) Documents cités:
- EP-A- 0 036 983
- EP-A- 0 064 476
- FR-A- 2 619 475
- US-A- 3 391 279
- US-A- 3 738 168
- US-A- 4 596 461
- US-A- 4 871 250
- PATENT ABSTRACTS OF JAPAN vol. 5, no. 27 (E-46)(699) 18 Février 1981& JP-A-55 154 787
- PATENT ABSTRACTS OF JAPAN vol. 12, no. 451 (P-791)(3298) 28 Novembre 1988 & JP-A-63 173 930

## Description

La présente invention concerne le domaine des lasers de puissance, en particulier utilisés dans l'industrie à des fins de soudage, de découpe et de traitement thermique, et a pour objet un dispositif d'analyse en mode continu et en mode impulsionnel de la répartition d'énergie au sein d'un faisceau laser de puissance et de l'alignement de ce dernier.

Un faisceau laser est constitué par une onde lumineuse très énergétique qui prend naissance dans une cavité comportant plusieurs miroirs entre lesquels elle effectue de nombreux allers et retours avant d'être extraite pour être dirigée vers un poste de travail. La répartition énergétique d'un faisceau laser coupé dans un plan perpendiculaire à son axe dépend de la géométrie de la cavité dans laquelle il a été généré.

Pour des raisons de simplification, le faisceau gaussien, qui est actuellement le plus répandu, servira seul d'exemple, l'invention étant toutefois applicable à d'autres formes de faisceau sans limitation de ses performances.

Dans un faisceau gaussien, une bonne part de l'énergie est concentrée au centre de la tache, et cette énergie décroît en correspondance avec l'éloignement de l'axe du faisceau à la manière d'une courbe de Gauss. Dans la pratique, cependant, le faisceau n'est jamais parfaitement gaussien et comporte toujours quelques pics dus à des problèmes d'aberrations optiques, d'encrassage, "d'usure" et de réglage des miroirs, etc... Ces pics peuvent souvent être minimisés par un réglage fin de l'alignement des miroirs.

La qualité du faisceau dépend généralement de la répartition d'énergie, qui conditionne les performances réalisées lors des opérations d'usinage, telles que la découpe, le soudage, les traitements thermiques, ou autres, et qui doit être parfaitement contrôlée. Ce contrôle de la distribution de l'énergie au sein du faisceau est actuellement très difficile à réaliser par des moyens simples et peu coûteux, contrairement au réglage des différents miroirs de la cavité.

Actuellement, un tel contrôle est réalisé, soit par un tir dans du polyméthylacrylate de méthyle, soit au moyen d'analyseurs de faisceau.

Le tir dans le polyméthylacrylate de méthyle donne une empreinte du faisceau qui est, cependant, sujette à caution du fait du lissage de l'empreinte par les vapeurs de polyméthylacrylate de méthyle, ne permettant ainsi que que des indications grossièrement qualitatives.

Les analyseurs de faisceau connus, qui font appel à la technologie des détecteurs au silicium, permettent de visualiser sur l'écran d'un oscilloscope la répartition d'énergie au sein d'un faisceau laser, en prélevant une partie de l'énergie incidente.

Mais ces appareils fournissent des résultats peu reproductibles du fait des difficultés de réglage, des pièces en mouvement, des intermédiaires entre faisceau et détecteurs et de la faible partie utile du faisceau pour la mesure. En outre, certains de ces appareils ne dressent le profil de la répartition énergétique dans le faisceau que sur deux axes, sans donner accès au relief global de cette répartition.

Il existe, par ailleurs, encore d'autres dispositifs d'analyse, utilisés comme montages de laboratoire, qui permettent l'obtention de bons résultats, mais sont, cependant, inexploitables industriellement du fait de leur trop grande complexité.

On connaît également, par FR-A-2 619 475, un dispositif d'analyse de la répartition d'énergie au sein d'un faisceau laser de puissance, essentiellement constitué par un capteur thermo-électrique directement exposé au faisceau laser et délivrant des signaux électriques à un dispositif intermédiaire de démultiplexage et d'amplification, et par un ordinateur ou un micro-ordinateur de traitement des mesures et de visualisation en temps réel de la distribution de l'énergie dans le faisceau, relié au dispositif intermédiaire et pilotant ce dernier, caractérisé en ce qu'il fonctionne en mode continu et en mode impulsionnel, et en ce que le capteur thermoélectrique est constitué par un corps étanche, dont la face, tournée vers la source du faisceau laser, est métallique et constitue, en coopération avec des fils métalliques, le support des thermocouples disposés sur des cercles coaxiaux ou suivant une matrice carrée ou rectangulaire, ou encore suivant une croix ou une étoile, les fils traversant, de manière étanche, la face du corps opposée à la face tournée vers la source du faisceau laser, et le corps étant pourvu, en outre, de deux orifices de circulation d'un fluide de refroidissement.

Les thermocouples sont avantageusement réalisés à partir de couples fer-constantan, la face du corps du capteur étant réalisée en une tôle de fer pur, dont l'état de surface est uniforme, et les fils métalliques étant en constantan ; la soudure entre chaque fil du thermocouple et la tôle formant la face est réalisée, soit à l'arc par décharge capacitive d'une rampe de condensateurs, soit à l'aide d'un laser pulsé, par soudure par transparence.

La disposition des thermocouples est fonction de la finesse d'analyse, ou résolution requise, du diamètre du faisceau au niveau du plan d'analyse, et du nombre de voies du dispositif intermédiaire de démultiplexage auquel lesdits thermocouples sont reliés, et l'écartement entre chacun des thermocouples dépend du diamètre des fils et du procédé de soudage qui est adopté.

La face du corps étanche tournée vers la source du faisceau laser est refroidie par une circulation forcée d'un liquide de refroidissement, généralement de l'eau, dont le débit est régulé de manière à permettre l'établissement du régime thermique.

Le dispositif d'analyse selon FR-A-2 619 475 est monté de manière pivotable sur un axe parallèle à l'axe du faisceau laser, soit extérieurement devant le hublot de sortie de la cavité laser, soit intérieurement devant ledit hublot dans la cavité laser. Ainsi, pour la réalisation d'une mesure il suffit d'interrompre le faisceau laser par interposition du dispositif, ce dernier étant pivoté hors du faisceau après la mesure.

Le capteur peut également être monté perpendiculairement à l'axe du faisceau laser et coopérer, pour la mesure, avec un obturateur escamotable constitué par un miroir incliné à 45° par rapport aux axes du faisceau laser et du capteur, et pouvant être placé dans le par cours du faisceau laser au moyen d'un vérin ou d'une came au moment de la mesure. Ainsi, le dispositif permet de contrôler le faisceau qui est réfléchi par le miroir sur le capteur avant utilisation sur le poste de travail. Dans un tel cas, le contrôle du faisceau est effectué pendant les temps morts, en utilisant le capteur comme piège à lumière.

Le capteur peut également être monté obliquement par rapport au faisceau laser et coopérer avec un obturateur escamotable incliné de manière correspondante, ou remplacer ce dernier, et réfléchir l'énergie non absorbée sur un piège à lumière.

Dans le cas d'un contrôle du faisceau à l'extérieur de la cavité laser, le dispositif précité peut permettre d'effectuer des diagnostics sur l'état des optiques par réalisation de contrôles du faisceau laser avant et après chacune des optiques. Le dispositif est également utilisable pour la vérification des stabilités directionnelles de mode et de dimension du faisceau.

L'ordinateur ou le micro-ordinateur de traitement des mesures et de visualisation en temps réel de la distribution de l'énergie dans le faisceau est relié au dispositif intermédiaire par un convertisseur analogique-digital, et commande ledit dispositif au moyen d'une interface parallèle. Cet ordinateur ou micro-ordinateur, qui comporte de manière connue une unité centrale, une mémoire de masse et un écran graphique, est relié, en outre, à une imprimante.

Ce dispositif permet un asservissement en position des miroirs de la cavité laser à partir d'une interprétation rapide des mesures enregistrées, et donc de réaliser un pilotage quasiment en temps réel desdits miroirs de la cavité laser.

Toutefois, ce dispositif nécessite, en vue de l'analyse du faisceau dans le chemin optique, une répétition des mesures après chaque miroir par déplacement et insertion du capteur dans le faisceau à la suite de chaque miroir, de sorte que l'analyse de la répartition d'énergie reste malgré tout relativement longue et entraîne une interruption dudit faisceau.

En outre, ce capteur ne permet pas une vérification simultanée de l'alignement du faisceau.

De plus, on connaît par le document Patent abstract of Japan, vol. 5, no. 27 (E-46)(699), 18 février 1981 ; & JP-A-55 154 787 (KOGYO GIJUTSUIN (JAPAN)) 02-12-1980 un dispositif de mesure de la température d'un miroir en vue du contrôle de la puissance globale du laser en tenant compte du coefficient d'absorption de la surface réfléchissante.

Un tel dispositif, du fait des informations restituées, ne permet pas la détermination de la répartition d'énergie du faisceau, ni même la connaissance de la position du faisceau sur l'optique.

Ceci est dû, en particulier, à la conductivité du cuivre et à l'épaisseur du miroir, qui, compte tenu de la faible absorption d'énergie, entraîneront une faible élévation de la température, uniformément sur toute la surface arrière du miroir, non mobile.

Par ailleurs, on connaît également, par le document US-A-3 738 168, un dispositif d'exploration d'un faisceau laser comprenant une fine plaque formant miroir déflecteur, sous laquelle sont disposés plusieurs thermocouples, maintenus en place au moyen d'une fine couche d'époxy.

Toutefois, aucun moyen de refroidissement n'est prévu, ce qui n'autorise pas une utilisation dudit dispositif en mode continu.

En outre, il n'est fait mention d'aucune possibilité de mouvement asservi de ladite plaque.

La présente invention a pour but de pallier ces inconvénients.

Elle a, en effet, pour objet un dispositif d'analyse en mode continu et en mode impulsionnel de la répartition d'énergie au sein d'un faisceau laser de puissance et de l'alignement de ce dernier, essentiellement constitué par un capteur thermo-électrique directement exposé au faisceau laser et délivrant des signaux électriques à un dispositif intermédiaire de démultiplexage et d'amplification, et par un ordinateur ou un micro-ordinateur de traitement des mesures et de visualisation en temps réel de la distribution de l'énergie dans le faisceau, relié au dispositif intermédiaire et pilotant ce dernier, et qui fonctionne en mode continu et en mode impulsionnel, le capteur thermo-électrique étant constitué par un corps étanche, dont la face, tournée vers la source du faisceau laser, est métallique et constitue, en coopération avec des fils métalliques, le support des thermocouples disposés sur des cercles coaxiaux ou suivant une matrice carrée ou rectangulaire, ou encore suivant une croix ou une étoile, les fils traversant, de manière étanche, la face du corps opposée à la face tournée vers la source du faisceau laser, et le corps étant pourvu, en outre, de deux orifices de circulation d'un fluide de refroidissement, caractérisé en ce que le capteur est intégré dans la face arrière d'un miroir de la cavité laser, ledit miroir formant la face avant dudit capteur et étant monté sur un axe, actionné par un moteur pas-à-pas ou analogue, dont la commande est réalisée par l'intermédiaire de l'ordinateur ou du micro-ordinateur de traitement des mesures, en fonction de ces dernières, de sorte qu'il est possible d'analyser en continu la répartition d'intensité au sein d'un faisceau laser lors d'un tir pulsé ou continu et de contrôler le faisceau et le réglage dudit miroir par l'utilisation d'une matrice de thermocouples reliée audit ordinateur, le capteur étant exposé directement et en continu au faisceau et permettant de visualiser en temps réel la distribution dans le faisceau.

L'invention sera mieux comprise, grâce à la description ci-après, qui se rapporte à un mode de réalisation préféré, donné à titre d'exemple non limitatif, et expliqué avec référence au dessin schématique annexé, dans lequel :
la figure 1 est une vue en coupe d'un miroir pourvu d'un capteur conforme à l'invention ;
la figure 2 est une vue en plan par l'arrière du miroir suivant la figure 1, le couvercle de fermeture étant enlevé, et
la figure 3 est une vue partielle en élévation latérale et en coupe, à plus grande échelle, du miroir suivant la figure 1.

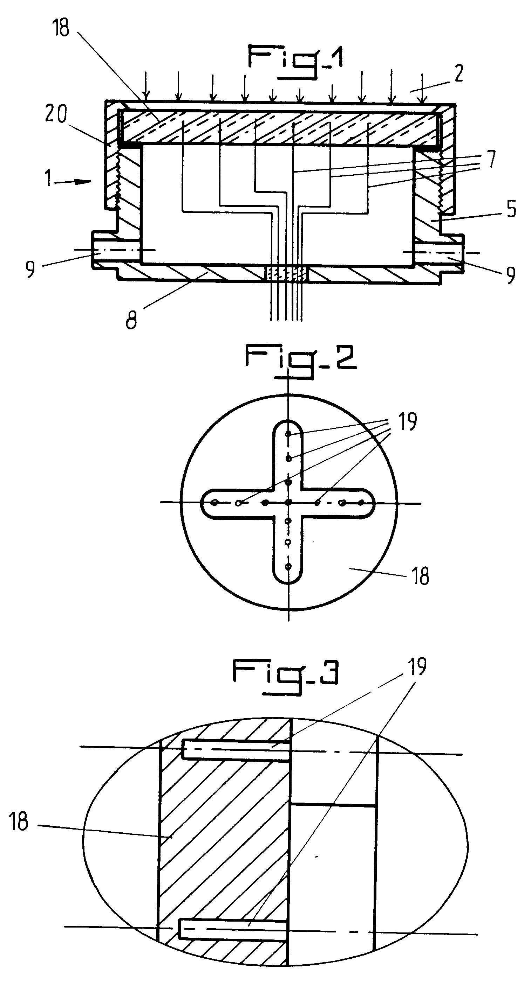

Conformément à l'invention, et comme le montre plus particulièrement, à titre d'exemple, la figure 1 du dessin annexé, le dispositif d'analyse de la répartition d'énergie au sein d'un faisceau laser de puissance, qui est essentiellement constitué par un capteur thermoélectrique 1 directement exposé au faisceau laser 2 et délivrant des signaux électriques à un dispositif intermédiaire de démultiplexage et d'amplification, et par un ordinateur ou un micro-ordinateur de traitement des mesures et de visualisation en temps réel de la distribution de l'énergie dans le faisceau 2, relié au dispositif intermédiaire et pilotant ce dernier, et qui fonctionne en mode continu et en mode impulsionnel, le capteur thermo-électrique étant constitué par un corps étanche 5, dont la face, tournée vers la source du faisceau laser, est métallique et constitue, en coopération avec des fils métalliques 7, le support des thermocouples disposés sur des cercles coaxiaux ou suivant une matrice carrée ou rectangulaire, ou encore suivant une croix ou une étoile, les fils 7 traversant, de manière étanche, la face 8 du corps 5 opposée à la face tournée vers la source du faisceau laser 2, et le corps 5 étant pourvu, en outre, de deux orifices 9 de circulation d'un fluide de refroidissement, caractérisé en ce que le capteur 1 est avantageusement intégré dans la face arrière d'un miroir 18 de la cavité laser, ledit miroir 18 formant la face avant dudit capteur 1 et étant monté sur un axe, actionné par un moteur pas-à-pas ou analogue, dont la commande est réalisée par l'intermédiaire de l'ordinateur ou du micro-ordinateur de traitement des mesures, en fonction de ces dernières, de sorte qu'il est possible d'analyser en continu la répartition d'intensité au sein d'un faisceau laser lors d'un tir pulsé ou continu et de contrôler le faisceau et le réglage dudit miroir 18 par l'utilisation d'une matrice de thermocouples reliée audit ordinateur ou micro-ordinateur, ledit capteur 1 étant exposé directement et en continu au faisceau et permettant de visualiser en temps réel la distribution dans le faisceau.

Le miroir 18, qui est, de manière connue, un miroir en cuivre poli est avantageusement percé, en face perçage, de trous borgnes 19 (figures 1 à 3) approchant la surface réfléchissante d'une dimension correspondant sensiblement à leur diamètre, à savoir de l'ordre de 0,5 mm.

Ces trous borgnes 19 peuvent être répartis sur la surface de la face arrière du miroir 18 suivant une matrice préétablie, par exemple, dans le mode de réalisation représenté à la figure 2, suivant une matrice en croix, chaque trou 19 étant pourvu d'un fil de constantan 7 soudé dans son fond par décharge capacitive afin de constituer un couple thermo-électrique.

La face 8 du capteur 1 opposée au miroir 18 est sous forme d'un couvercle étanche muni de trous de passage étanche des fils 7 et fixé sur la face arrière du miroir 18 au moyen d'une bague filetée intérieurement 20 s'appuyant sur la périphérie du miroir 18 et coopérant avec un filetage du capteur 1. Bien entendu, tout autre dispositif de fixation du miroir sur le capteur, ainsi que tout autre dispositif de refroidissement sont possibles.

Ainsi, une circulation d'un fluide de refroidissement, à savoir notamment d'eau, est rendue possible en face arrière du miroir 18 formant capteur.

Conformément à une autre caractéristique de l'invention, tous les miroirs de la cavité laser sont pourvus d'un capteur thermo-électrique intégré dans leur face arrière, de sorte qu'il est possible de réaliser l'alignement de la cavité laser, afin d'optimiser le rendement de la machine laser.

Les fils 7 sont avantageusement reliés à un dispositif intermédiaire de démultiplexage et à un ordinateur ou à micro-ordinateur de traitement des mesures et de visualisation en temps réel de la distribution de l'énergie dans le faisceau 2.

Grâce à l'invention, il est possible d'analyser en continu la répartition d'intensité au sein d'un faisceau laser lors d'un tir pulsé ou continu, par l'utilisation d'une matrice de thermocouples reliée à un ordinateur, le capteur 1 comportant ladite matrice étant directement incorporé à au moins un miroir 18 et exposé directement et en continu au faisceau et permettant de visualiser en temps réel la distribution dans le faisceau.

En outre, le dispositif conforme à l'invention permet de réaliser, à partir du contrôle du faisceau, un réglage optimal des miroirs de la cavité laser, par intervention manuelle ou à l'aide d'un asservissement. Ce dispositif est simple de mise en oeuvre et de réglage et d'un faible prix de revient, et permet un contrôle en continu fiable, à savoir sans intermédiaire entre le faisceau et le capteur, et facilement exploitable par traitement informatique. De plus, ce dispositif est peu encombrant et ne comporte pas de pièce en mouvement.

Conformément à une autre caractéristique de l'invention, les miroirs placés directement dans la chaîne optique de transport du faisceau laser sont également équipés de capteurs et permettent le contrôle et l'alignement, en tous lieux et à tout moment, du faisceau laser, en particulier en ambiance industrielle.

Le dispositif conforme à l'invention présente des possibilités d'utilisation particulièrement intéressantes en ambiance industrielle, par exemple, pour déceler une anomalie de fonctionnement et/ou pour faire un suivi de l'état d'une machine, notamment par archivage informatique. Dans le cas d'une utilisation en laboratoire, le dispositif permet d'assurer utilement la bonne reproductibilité des essais effectués. Enfin, ce dispositif est utilisable pour des faisceaux laser de toutes natures et de toutes géométries.

Bien entendu, l'invention n'est pas limitée au mode de réalisation décrit et représenté au dessin annexé. Des modifications restent possibles, notamment du point de vue de la constitution des divers éléments ou par substitution d'équivalents techniques, sans sortir pour autant du domaine de protection de l'invention.

## Revendications

1. Dispositif d'analyse de la répartition d'énergie au sein d'un faisceau laser de puissance, essentiellement constitué par un capteur thermo-électrique (1) directement exposé au faisceau laser (2) et délivrant des signaux électriques à un dispositif intermédiaire de démultiplexage et d'amplification, et par un ordinateur ou un micro-ordinateur de traitement des mesures et de visualisation en temps réel de la distribution de l'énergie dans le faisceau (2), relié au dispositif intermédiaire et pilotant ce dernier, et qui fonctionne en mode continu et en mode impulsionnel, le capteur thermo-électrique étant constitué par un corps étanche (5), dont la face, tournée vers la source du faisceau laser, est métallique et constitue, en coopération avec des fils métalliques (7), le support des thermocouples disposés sur des cercles coaxiaux ou suivant une matrice carrée ou rectangulaire, ou encore suivant une croix ou une étoile, les fils (7) traversant, de manière étanche, la face (8) du corps (5) opposée à la face tournée vers la source du faisceau laser (2), et le corps (5) étant pourvu, en outre, de deux orifices (9) de circulation d'un fluide de refroidissement, caractérisé en ce que le capteur (1) est intégré dans la face arrière d'un miroir (18) de la cavité laser, ledit miroir (18) formant la face avant dudit capteur (1) et étant monté sur un axe, actionné par un moteur pas-à-pas ou analogue, dont la commande est réalisée par l'intermédiaire de l'ordinateur ou du micro-ordinateur de traitement des mesures, en fonction de ces dernières, de sorte qu'il est possible d'analyser en continu la répartition d'intensité au sein d'un faisceau laser lors d'un tir pulsé ou continu et de contrôler le faisceau et le réglage dudit miroir (18) par l'utilisation d'une matrice de thermocouples reliée audit ordinateur, le capteur (1) étant exposé directement et en continu au faisceau et permettant de visualiser en temps réel la distribution dans le faisceau.

2. Dispositif, suivant la revendication 1, caractérisé en ce que les miroirs placés directement dans la chaîne optique de transport du faisceau sont également équipés de capteurs et permettent le contrôle et l'alignement, en tout lieu et à tout moment, du faisceau laser, en particulier en ambiance industrielle.

3. Dispositif, suivant l'une quelconque des revendications 1 et 2, caractérisé en ce que le miroir (18) est avantageusement percé, en face arrière, par électro-érosion ou par tout autre procédé de perçage, de trous borgnes (19) approchant la surface réfléchissante d'une dimension correspondant sensiblement à leur diamètre, à savoir de l'ordre de 0,5 mm.

4. Dispositif, suivant l'une quelconque des revendications 1 à 3, caractérisé en ce que la face (8) du capteur (1) opposée au miroir (18) est sous forme d'un couvercle étanche muni de trous de passage étanche des fils (7) et fixé sur la face arrière du miroir (18) au moyen d'une bague filetée intérieurement (20) s'appuyant sur la périphérie du miroir (18) et coopérant avec un filetage du capteur (1).

5. Dispositif, suivant l'une quelconque des revendications 1 à 4, caractérisé en ce qu'un capteur thermo-électrique est intégré dans la face arrière de chaque miroir de la cavité laser, de sorte qu'il est possible de réaliser l'alignement de la cavité laser afin d'optimiser le rendement de la machine laser.

## Patentansprüche

1. Vorrichtung zur Analyse der Energieverteilung in einem Leistungslaserstrahl, im wesentlichen gebildet von einem thermoelektrischen Aufnehmer (1), der direkt dem Laserstrahl (2) ausgesetzt ist und elektrische Signale an eine Zwischenvorrichtung zum Demultiplexen und zur Verstärkung liefert, sowie von einem mit der Zwischenvorrichtung verbundenen und diese steuernden Rechner oder Mikrorechner zur Behandlung von Messungen und zur Visualisierung der Energieverteilung in dem Strahl (2) in Echtzeit, wobei die Vorrichtung kontinuierlich und im Impulsbetrieb arbeitet und der thermoelektrische Aufnehmer von einem dichten Körper (5) gebildet wird, dessen der Quelle des Laserstrahls zugewandte Seite metallisch ist und im Zusammenwirken mit Metalldrähten (7) den Träger für Thermopaare bildet, die auf koaxialen Kreisen oder einer quadratischen oder rechteckigen Matrix folgend oder auch einem Kreuz oder einem Stern folgend angeordnet sind, wobei die Drähte (7) in dichter Weise die Seite (8) des Körpers (5) durchqueren, die der der Quelle des Laserstrahls (2) zugewandten Fläche entgegengesetzt ist, und der Körper (5) darüber hinaus mit zwei Zirkulationsöffnungen (9) für ein Kühlfluid versehen ist, dadurch gekennzeichnet, daß der Aufnehmer (1) in die Rückfläche eines Spiegels (18) des Laserhohlraums integriert ist, der Spiegel (18) die Vorderfläche des Aufnehmers (1) bildet und auf einer Achse angebracht ist, die von einem Schrittmotor o. dgl. betätigt wird, dessen Steuerung über den Rechner oder den Mikrorechner zur Behandlung von Messungen verwirklicht wird, als Funktion der letztgenannten, so daß es möglich ist, kontinuierlich die Intensitätsverteilung in einem Laserstrahl während eines gepulsten oder kontinuierlichen Schusses zu analysieren und den Strahl und die Regelung des Spiegels (18) durch Verwendung einer mit dem Rechner verbundenen Matrix von Thermopaaren zu kontrollieren, wobei der Aufnehmer (1) direkt und kontinuierlich dem Strahl ausgesetzt ist und die Visualisierung der Verteilung in dem Strahl in Echtzeit ermöglicht.

2. Vorrichtung nach Anspruch 1, dadurch gekennzeichnet, daß die direkt in die optische Transportkette des Strahls gesetzten Spiegel ebenfalls mit Aufnehmern ausgerüstet sind und die Steuerung und Ausrichtung des Laserstrahls an jeder Stelle und in jedem Augenblick ermöglichen, insbesondere in einer industriellen Umgebung.

3. Vorrichtung nach einem der Ansprüche 1 und 2, dadurch gekennzeichnet, daß der Spiegel (18) vorteilhafterweise auf seiner Rückseite durch eine Elektroerosion oder durch jedes andere Bohrverfahren mit Sacklöchern (19) gebohrt ist, die sich der reflektierenden Oberfläche bis auf eine im wesentlichen ihrem Durchmesser entsprechende Größe nähern, d. h. der Größenordnung von 0,5 mm.

4. Vorrichtung nach einem der Ansprüche 1 bis 3, dadurch gekennzeichnet, daß die dem Spiegel (18) entgegengesetzte Seite (8) des Aufnehmers (1) in Form eines dichten Deckels ist, der mit drei Löchern zum dichten Durchgang der Drähte (7) versehen und auf der Rückfläche des Spiegels (18) mit Hilfe eines innen mit einem Gewinde versehenen Rings (20) befestigt ist, der sich auf dem Umfang des Spiegels (18) abstützt und mit einem Gewinde des Aufnehmers (1) zusammenwirkt.

5. Vorrichtung nach einem der Ansprüche 1 bis 4, dadurch gekennzeichnet, daß ein thermoelektrischer Aufnehmer in die Rückfläche jedes Spiegels des Laserhohlraums integriert ist, so daß es möglich ist, die Ausrichtung des Laserhohlraums zu verwirklichen, um den Wirkungsgrad der Lasermaschine zu optimieren.

## Claims

1. A device for analysing the energy distribution within a power laser beam, comprising essentially a thermoelectric sensor (1) directly exposed to the laser beam (2) and delivering electrical signals to an intermediate demultiplexing and amplifying device, and a computer or microcomputer for processing the measurements and real-time display of the energy distribution in the beam (2), said computer or microcomputer being connected to the intermediate device and controlling the latter, and which operates in continuous mode and in pulse mode, the thermoelectric sensor comprising a sealed member (5), whose surface facing the laser beam source is metal and, in co-operation with metal wires (7), forms the support for thermocouples disposed on coaxial circles or in a square or rectangular matrix or alternatively in a cross or star, the wires (7) sealingly extending through the surface (8) of the member (5) remote from the surface facing the source of the laser beam (2), and the member (5) also being formed with two orifices (9) for the circulation of a cooling fluid,
characterised in that the sensor (1) is integrated in the rear surface of a mirror (18) of the laser cavity, said mirror (18) forming the front surface of the said sensor (1) and being mounted on a shaft, actuated by a stepping motor or the like, which is controlled by means of the computer or microcomputer for processing the measurements, in dependence on the latter, so that it it possible continuously to analyse the intensity distribution within a laser beam on the occasion of a pulsed or continuous burst and control the beam and the adjustment of the said mirror (18) by the use of a thermocouple matrix connected to the said computer, the sensor (1) being directly and continuously exposed to the beam and allowing real-time display of the distribution in the beam.

2. A device according to claim 1, characterised in that the mirrors disposed directly in the optical beam transmission chain are also provided with sensors and allow control and alignment, in any place and at any time, of the laser beam, particularly in an industrial environment.

3. A device according to claim 1 or 2, characterised in that the mirror (18) is advantageously pierced at the rear by electro-erosion or by any other piercing process, with blind holes (19) approaching the reflecting surface by a dimension corresponding substantially to their diameter, namely of the order of 0.5 mm.

4. A device according to any one of claims 1 to 3, characterised in that the surface (8) of the sensor (1) remote from the mirror (18) is in the form of a sealed cover provided with holes for the sealed passage of the wires (7) and fixed on the rear surface of the mirror (18) by means of an internally screwthreaded ring (20) bearing on the periphery of the mirror (18) and co-operating with a screwthread of the sensor (1).

5. A device according to any one of claims 1 to 4, characterised in that a thermoelectric sensor is integrated in the rear surface of each mirror of the laser cavity so that it is possible to align the laser cavity in order to optimise the efficiency of the laser machine.
